# EUROPÄISCHE PATENTSCHRIFT

(11) **EP 1 263 641 B1**
(45) Veröffentlichungstag und Bekanntmachung des Hinweises auf die Patenterteilung: **08.12.2004**
(21) Anmeldenummer: 01903715.9
(22) Anmeldetag: 07.02.2001
(51) Int. Cl.: B62D 57/024

(54) **VORRICHTUNG ZUR DURCHFÜHRUNG VON ARBEITEN AN EINER FLÄCHE MIT BASISSTATION**
DEVICE COMPRISING A BASE STATION, FOR CARRYING OUT WORK ON A SURFACE
DISPOSITIF POUR REALISER DES TRAVAUX SUR UNE SURFACE, EN LIAISON AVEC UNE STATION DE BASE

(30) Priorität: 29.02.2000 DE 10009514
(43) Veröffentlichungstag der Anmeldung: 11.12.2002
(73) Patentinhaber: BSH Bosch und Siemens Hausgeräte GmbH, 81739 München (DE)
(72) Erfinder: KONRAD, Jürgen, 89075 Ulm/Donau (DE)
(86) Internationale Anmeldenummer: PCT/EP2001/001328
(87) Internationale Veröffentlichungsnummer: WO 2001/064504

(56) Entgegenhaltungen:
- US-A- 4 029 164
- US-A- 4 688 289
- US-A- 5 890 250
- US-A- 5 901 720

## Beschreibung

Die Erfindung betrifft eine Vorrichtung zum Durchführen von Arbeiten an einer Fläche mit wenigstens einer Arbeitsvorrichtung, die Mittel zum Erzeugen eines Unterdrucks zwischen sich und der Fläche und Antriebsmittel zum Bewegen auf der Fläche aufweist und die mittels einer Versorgungsleistung mit einer Basisstation verbunden ist.

Eine gattungsgemäße Vorrichtung ist aus US 5 890 250 A bekannt.

Durch die GB 2 268 457 A ist eine Vorrichtung bekannt, bei der mehrere Arbeitsvorrichtungen, die sich durch Unterdruck an einer schiefen oder senkrechten Fläche halten und sich entlang dieser bewegen können, über eine Versorgungsleitung mit einer Druckluftquelle und einer Steuerung verbunden. Über die Versorgungsleitung findet zum einen der Datenaustausch zwischen den Arbeitsvorrichtungen und der Steuerung statt und werden die Arbeitsvorrichtungen zum andem mit Energie in Form von Druckluft zum Erzeugen des Unterdrucks versorgt. Eine derartige Vorrichtung ist femer auch aus der US 5,077,510 bekannt.

Die US 5 890 250 A weist insbesondere den Nachteil auf, daß die Basisstation eine aufwändige Infrastruktur am Gebäude erfordert.

Der vorliegenden Erfindung liegt die Aufgabe zugrunde, eine Vorrichtung der eingangs genannten Art zu schaffen, die kostengünstiger ausführbar ist.

Diese Aufgabe wird erfindungsgemäß durch eine Vorrichtung mit den Merkmalen des Anspruchs 1 gelöst.

Wegen der Sicherheitsleine zwischen der Basisstation und der wenigstens einen Arbeitsvorrichtung kann diese im Fehlerfall, wenn die Einrichtungen zum Ansaugen an die Fläche versagen, nur um ein bestimmtes Maß herunterfallen. Auf diese Weise kann die Vorrichtung auch außen an hohen Gebäuden eingesetzt werden, ohne daß die Gefahr besteht, daß die wenigstens eine Arbeitsvorrichtung abstürzt und am Fuß des Gebäudes Gegenstände beschädigt oder Personen verletzt. Falls sich die wenigstens eine Arbeitsvorrichtung außen an einem Gebäude ablöst, so kann sie nur entsprechend der Länge der Sicherheitsleine um ein bestimmtes Maß herunterfallen, da es vorzugsweise so gewählt wird, daß die wenigstens eine Arbeitsvorrichtung nicht bis auf den Boden fallen kann.

Vorteilhafte Weiterbildungen der Erfindung sind in den Unteransprüchen beschrieben.

Zum Absichern der wenigstens einen Arbeitsvorrichtung kann vorgesehen sein, daß die Basisstation eine höhere Masse besitzt und/oder mit Mitteln zum Verankern an seiner Umgebung versehen ist. Beispielsweise kann die Basisstation rutschfeste Gerätefüße oder eine Zusatzklammer oder Zusatzleine zum Verankern an anderen Gegenständen aufweisen.

Vorteilhafterweise beinhaltet die Basisstation eine wiederaufladbare Batterie mit zugehöriger Ladeeinrichtung sowie einen Stromversorgungsanschluß. Die gesamte Vorrichtung ist auf diese Weise sehr flexibel einsetzbar, wobei eine besonders lange Betriebsdauer erzielt werden kann, da in der Basisstation wesentlich größere Batterien vorgesehen werden können, als dies in der wenigstens einen Arbeitsvorrichtung möglich wäre, da bei dieser wegen der energiezehrenden Anhaftung durch Unterdruck ein niedriges Gewicht angestrebt wird.

Darüberhinaus kann vorgesehen sein, daß die wenigstens eine Arbeitsvorrichtung über die Versorgungsleitung mit wenigstens einem Betriebsmittel versorgt wird. Wenn beispielsweise die wenigstens eine Arbeitsvorrichtung zum Reinigen der Fläche verwendet wird, kann über die Versorgungsleitung ein Reinigungsmittel bzw. eine Reinigungsflüssigkeit zugeführt werden. Ebenso können über die Versorgungsleitung verbrauchte Betriebsmittel, wie beispielsweise verbrauchte Reinigungsflüssigkeit, wieder abgeführt werden.

Die Basisstation weist in so einem Fall Einrichtungen zum Vorhalten von Betriebsmitteln bzw. Einrichtungen zum Auffangen von verbrauchten Betriebsmitteln auf. Für den Einsatz wird die wiederaufladbare Batterie in der Basisstation geladen, in dem die Basisstation einfach an das Stromversorgungsnetz angeschlossen wird und in dem für den Betrieb nötigen Betriebsmittel wie beispielsweise Reinigungs- oder Spülflüssigkeiten nachgefüllt werden. Dazu muß die wenigstens eine Arbeitsvorrichtung nicht an der Basisstation angeschlossen sein. Die Basisstation und die wenigstens eine Arbeitsvorrichtung können anschließend zum Einsatzort gebracht werden und sind nach einem gegebenenfalls nötigen Anschließen der Sicherheitsleine und der Versorgungsleitung einsatzbereit.

Die Versorgung der wenigstens einen Arbeitsvorrichtung mit Energie und/oder wenigstens einem Betriebsmittel durch eine Versorgungsleitung von einer Basisstation aus ist auch unabhängig von einer Sicherheitsleine möglich.

Um ein Verwirren der Versorgungsleitung oder der Sicherheitsleine zu verhindern, können Einrichtungen zum Ab- bzw. Aufwickeln der Sicherheitsleine und der Versorgungsleitung in der Basisstation und/oder der wenigstens einen Arbeitsvorrichtung vorgesehen sein. Diese Einrichtungen können beispielsweise vorgespannt sein, so daß die Leitungen abgewickelt werden, sobald sich die wenigstens eine Arbeitsvorrichtung von der Basisstation entfernt und selbsttätig wieder aufgewickelt werden, wenn sie sich der Basisstation wieder nähert. Auf diese Weise kann auch die Gefahr verringert werden, daß bei der Bewegung wenigstens einen Arbeitsvorrichtung durch die Sicherheitsleine und/ oder die Versorgungsleitung Gegenstände umgerissen werden oder daß die Sicherheitsleine und/oder die Versorgungsleitung an Gegenständen hängenbleibt.

Die Abwicklung der Sicherheitsleine kann geschwindigkeitsabhängig gebremst oder verriegelt werden, so daß wie bei einem Sicherheitsgurt im Fehlerfall bei einem Ablösen der wenigstens einen Arbeitsvorrichtung der Fall möglichst schnell gestoppt wird.

Weitere Einzelheiten, Merkmale und Vorteile der Erfindung ergeben sich aus der folgenden Beschreibung eines Ausführungsbeispiels einer erfindungsgemäßen Vorrichtung unter Bezugnahme auf die Zeichnungen. Darin zeigen:
- Fig. 1: eine an einer Basisstation angeschlossene Arbeitsvorrichtung, bei der Durchführung von Reinigungsarbeiten an einer Fläche und
- Fig. 2: die Basisstation beim Aufladen der Batterie.

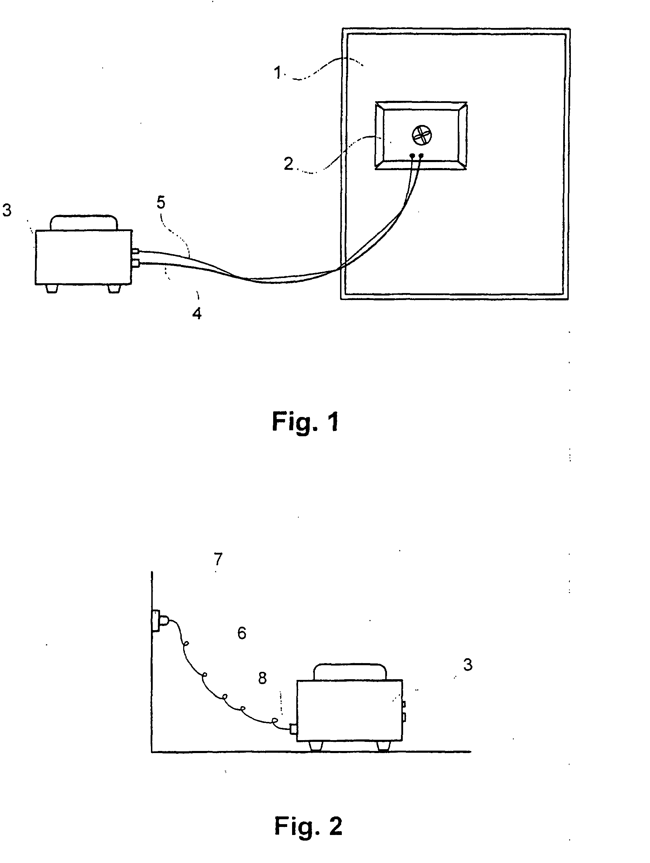

In Fig. 1 ist eine Vorrichtung zum Durchführen von Reinigungsarbeiten an einer Fläche 1 dargestellt, die aus einer Basisstation 3 und einer Arbeitsvorrichtung 2 besteht. Die Arbeitsvorrichtung 2 ist mit einem Unterdruckgebläse zum Ansaugen an die Fläche 1 sowie mit einem Fahrwerk zum Bewegen auf dieser Fläche 1 ausgestattet. Ferner weist die Arbeitsvorrichtung 2 eine Einrichtung zum Reinigen der Fläche 1 auf, die insbesondere ein Fenster sein kann.

Die Basisstation 3 und die Arbeitsvorrichtung 2 sind über eine Versorgungsleitung 4 und eine Sicherheitsleine 5 verbunden, wobei deren Verbindung insbesondere zur Basisstation 3 lösbar ist. Dabei kann vorgesehen sein, daß die Versorgungsleitung 4 und die Sicherheitsleine 5 gemeinsam mit einem Verbindungselement an die Basisstation 3 angeschlossen bzw. an ihr befestigt werden können.

Innerhalb der Basisstation 3 ist eine wiederaufladbare Batterie, eine zugehörige Ladeeinrichtung und eine Stromversorgungseinheit zum Anschluß an das Hausstromnetz vorgesehen. Auf diese Weise ist es möglich, die Batterien zum Betreiben der Arbeitsvorrichtung 2 durch einfaches Anschließen der Basisstation 3 an das Stromnetz aufzuladen.

In einer Weiterbildung kann die Basisstation 3 zusätzlich Einrichtungen zum Versorgen der Arbeitsvorrichtung 2 mit einer Reinigungsflüssigkeit aufweisen. Dazu ist in der Versorgungsleitung 4 ein entsprechender Schlauch vorgesehen, wobei zusätzlich die Versorgungsleitung 4 und die Basisstation 3 so eingerichtet sein können, daß die verbrauchte Reinigungsflüssigkeit von der Arbeitsvorrichtung 2 auch wieder zur Basisstation 3 abgeführt werden kann.

In Fig. 2 ist die Basisstation 3 beim Aufladen der Batterien dargestellt. Dazu ist die Basisstation 3 mit ihrem Stromversorgungsanschluß 8 über ein Stromkabel 6 an eine Steckdose 7 angeschlossen. Die Versorgungsleitung 4 sowie die Sicherheitsleine 5 können dabei von der Basisstation 3 entfernt werden, wodurch die Handhabbarkeit verbessert wird. Gegebenenfalls muß neue Reinigungsflüssigkeit in der Basisstation 3 nachgefüllt und verbrauchte Reinigungsflüssigkeit entfernt werden. Anschließend sind Basisstation 3 und Arbeitsvorrichtung 2 wieder einsatzbereit.

## Patentansprüche

1. Vorrichtung zum Durchführen von Arbeiten an einer Fläche (1), mit einer Basisstation (3) und wenigstens einer Arbeitsvorrichtung (2) wobei die wenigstens eine Arbeitsvorrichtung (2) mittels einer Versorgungsleitung (4) und mittels einer Sicherheitsleine (5) mit der Basisstation (3) verbunden ist, wobei die Tragfähigkeit der Sicherheits Leine größer als das Gewicht der wenigstens einen Arbeitsvorrichtung (2) ist, zur Verhinderung eines Absturzes, wenn sich die Arbeitsvorrichtung (2) von der Fläche (1) löst, **dadurch gekennzeichnet daß** die wenigstens eine Arbeitsvorrichtung als einzige Halteeinrichtung an der Fläche (1) eine Einrichtung zum Ansaugen der Arbeitsvorrichtung (2) an die Fläche (1) mittels Unterdruck aufweist und sämtliche Antriebsmittel zum Bewegen auf der Fläche (1) aufweist.

2. Vorrichtung nach Anspruch 1, **dadurch gekennzeichnet, daß** die Basisstation (3) schwerer als die wenigstens eine Arbeitsvorrichtung (2) ist und insbesondere das zwei- bis dreifache deren Masse besitzt.

3. Vorrichtung nach Anspruch 1 oder 2, **dadurch gekennzeichnet, daß** die Basisstation (3) Mittel zum Verankern an seiner Umgebung aufweist.

4. Vorrichtung nach einem der Ansprüche 1 bis 3, **dadurch gekennzeichnet, daß** die Basisstation (3) Einrichtungen zum Speichern und Bereitstellen von Energie aufweist.

5. Vorrichtung nach Anspruch 4, **dadurch gekennzeichnet, daß** die Basisstation (3) einen Stromversorgungsanschluß (8), eine wiederaufladbare Batterie und eine Ladeeinrichtung aufweist.

6. Vorrichtung nach einem der Ansprüche 1 bis 5, **gekennzeichnet durch** Einrichtungen zum Versorgen der wenigstens einen Arbeitsvorrichtung (2) mit wenigstens einem Betriebsmittel über die Versorgungsleitung (4).

7. Vorrichtung nach einem der Ansprüche 1 bis 6, **gekennzeichnet durch** Einrichtungen zum Abwickeln der Sicherheitsleine (5) und/oder die Versorgungsleitung (4) in der Basisstation (3) und/oder der wenigstens einen Arbeitsvorrichtung (2).

8. Vorrichtung nach Anspruch 7, **dadurch gekennzeichnet, daß** sie die Abwicklung der Sicherheitsleine (5) geschwindigkeitsabhängig bremst oder verriegelt.

## Claims

1. Device for carrying out operations at a surface (1), comprising a base station (3) and at least one operating device (2), wherein the at least one operating device (2) is connected with the base station (3) by means of a supply line (4) and by means of a safety cord (5), wherein the load-bearing capability of the safety cord is greater than the weight of the at least one operating device (2), for preventing crashing down if the operating device (2) detaches from the surface (1), **characterised in that** the at least one operating device comprises, as sole retaining device at the surface (1), a device for suction of the operating device (2) against the surface (1) by means of underpressure and has all drive means for movement on the surface (1).

2. Device according to claim 1, **characterised in that** the base station (3) is heavier than the at least one operating device (2) and, in particular, has two to three times the mass thereof.

3. Device according to claim 1 or 2, **characterised in that** the base station (3) comprises means for anchorage at its surroundings.

4. Device according to one of claims 1 to 3, **characterised in that** the base station (3) comprises devices for storing and providing energy.

5. Device according to claim 4, **characterised in that** the base station (3) comprises a current supply terminal (8), a rechargeable battery and a charging device.

6. Device according to one of claims 1 to 5, **characterised by** devices for supply of the at least one operating device (2) with at least one operating medium by way of the supply line (4).

7. Device according to one of claims 1 to 6, **characterised by** devices for unreeling the safety cord (5) and/or the supply line (4) in the base station (3) and/or the at least one operating device (2).

8. Device according to claim 7, **characterised in that** it brakes or locks the unreeling of the safety cord (5) in dependence on speed.

## Revendications

1. Dispositif pour réaliser des travaux sur une surface (1) avec une station de base (3) et au moins un dispositif de travail (2), le au moins un dispositif de travail (2) étant relié à la station de base (3) au moyen d'une conduite d'alimentation (4) et au moyen d'une corde de sécurité (5), la charge admissible de la corde de sécurité étant plus grande que le poids du au moins un dispositif de travail (2), pour empêcher une chute lorsque le dispositif de travail (2) se détache de la surface (1), **caractérisé en ce que** le au moins un dispositif de travail présente comme dispositif de retenue unique sur la surface (1) un appareil pour aspiration du dispositif de travail (2) sur la surface (1) au moyen d'une dépression et présente tout moyen d'entraînement pour son déplacement sur la surface (1).

2. Dispositif selon la revendication 1, **caractérisé en ce que** la station de base (3) est plus lourde que le au moins un dispositif de travail (2) et possède au moins deux ou trois fois sa masse.

3. Dispositif selon la revendication 1 ou 2, **caractérisé en ce que** la station de base (3) présente des moyens d'ancrage à son environnement.

4. Dispositif selon l'une des revendications 1 à 3, **caractérisé en ce que** la station de base (3) présente des appareils pour stocker et mettre à disposition de l'énergie.

5. Dispositif selon la revendication 4, **caractérisé en ce que** la station de base (3) présente un raccord d'alimentation en courant (8), une batterie rechargeable et un chargeur.

6. Dispositif selon l'une des revendications 1 à 5, **caractérisé par** des appareils pour alimentation du au moins un dispositif de travail (2) avec au moins un moyen de fonctionnement par la conduite d'alimentation (4).

7. Dispositif selon l'une des revendications 1 à 6, **caractérisé par** des appareils de déroulement de la corde de sécurité (5) et/ou de la conduite d'alimentation (4) dans la station de base (3) et/ou dans le au moins un dispositif de travail (2).

8. Dispositif selon la revendication 7, **caractérisé en ce qu'**il freine ou bloque le déroulement de la corde de sécurité (5) en fonction de la vitesse.
